# NEUE EUROPÄISCHE PATENTSCHRIFT

(11) **EP 2 183 950 B2**
(45) Veröffentlichungstag und Bekanntmachung des Hinweises auf die Entscheidung über den Einspruch: **25.01.2017**
(45) Hinweis auf die Patenterteilung: 07.03.2012
(21) Anmeldenummer: 09168155.1
(22) Anmeldetag: 19.08.2009
(51) Int. Cl.: A01B 73/00, A01D 41/14, A01D 75/00

(54) **Landwirtschaftliche Erntemaschine**
Agricultural harvester
Moissonneuse agricole

(30) Priorität: 07.11.2008 DE 102008056297
(43) Veröffentlichungstag der Anmeldung: 12.05.2010
(73) Patentinhaber: CLAAS Selbstfahrende Erntemaschinen GmbH, 33428 Harsewinkel (DE)
(72) Erfinder: Tilly, Thomas, 48231 Warendorf (DE); Pollklas, Manfred, 33378 Rheda-Wiedenbrück (DE)
(74) Vertreter: Budach, Steffen

(56) Entgegenhaltungen:
- EP-A1- 2 168 425
- EP-A2- 1 046 329
- DE-A1-102004 059 038
- US-A- 5 243 810
- US-A1- 2006 150 605
- Technisches Handbuch Selbstfahrende Feldhäcksler 7200, 7300, 7400, 7500, 7700 und 7800 Wirkungsweise und Prüfungen TM4667 01 Feb07 (Deutsch)

## Beschreibung

Die Erfindung betrifft eine selbstfahrende landwirtschaftliche Erntemaschine mit einem angebauten Vorsatzgerät, welches in einer Nichtarbeitsposition durch wenigstens einer mit dem Boden in Kontakt stehenden Stützradanordnung abgestützt wird und mit einer Bremseinrichtung.

Aufgrund der zunehmenden Leistungssteigerung von landwirtschaftlichen Erntemaschinen kommen immer größere und schwerere Vorsatzgeräte zum Einsatz. In der Regel werden Schneidwerke von Mähdreschern beim Straßentransport vom Mähdrescher abgekuppelt und werden auf einem Transportwagen abgelegt. Demgegenüber werden Maisgebisse und Maispflücker von Feldhäckslern in der Regel für den Straßentransport nicht abgekuppelt, sondern verbleiben am Feldhäcksler. Mittels unterschiedlicher Klappmechanismen können diese Vorsatzgeräte, wie auch Getreideschneidwerke, für den Straßentransport zur Erreichung einer schmaleren Breite verklappt werden. Nachteilig ist, dass durch das Abstützen des Vorsatzgerätes auf dem Transportwagen und die dadurch entstehende Gewichtsverlagerung auf den einzelnen Achsen, insbesondere aufgrund der Reduzierung der Last auf der vorderen gebremsten Triebachse, die Erntemaschine beim Bremsvorgang einen längeren Bremsweg benötigt, so dass Limits in Richtung eines maximal zulässigen Bremsweges überschritten werden. Gleichfalls besteht die Problematik, dass bei zuviel Last auf der vorderen gebremsten Triebachse das Fahrzeugheck beim Bremsvorgang vom Boden abhebt.

Aus der DE 199 18 551 ist eine als Feldhäcksler ausgeführte landwirtschaftliche Erntemaschine bekannt geworden, die frontseitig über einen ein landwirtschaftliches Arbeitsgerät aufnehmenden Zwischenanbau verfügt. Damit die Last des landwirtschaftlichen Arbeitsgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass beim Straßentransport zumindest ein Teil der Masse des landwirtschaftlichen Arbeitsgerätes über diese Stützräder auf dem Boden abgestützt wird, um solange das Stützrad mit dem Boden in Kontakt ist, eine solche Achslastverteilung zu erreichen, die den Normierungen entspricht. Nachteilig ist jedoch, dass dadurch, dass das vorhandene Stützrad eine Teillast des montierten Vorsatzgerätes aufnimmt, die dadurch erfolgende Achslastverteilung sich negativ auf den Bremsvorgang auswirkt, indem nicht mehr ausreichend Achslast auf der gebremsten Triebachse vorhanden ist, so dass Limits in Richtung eines zulässigen maximalen Bremsweg überschritten werden können.

Aus der DE 10 2005 001 412 A ist ein Wagen zur Abstützung eines an einer Erntemaschine montierten Erntevorsatzgerätes bekannt. Zur Gewichtsentlastung der Räder der Erntemaschine weist der Wagen mindestens ein sich nach unten erstreckendes Rad auf, wobei das Rad durch ein federndes Element am Wagengestell aufgehängt ist. Zur Federung dient ein Hydraulikzylinder, der mit einem den Auflagedruck des Stützrades vorgebenden Druckspeicher verbunden ist und damit ein in sich geschlossenes System bildet, das ein Abfangen von Bodenunebenheiten ermöglicht. Für unterschiedlich schwere Vorsatzgeräte oder verschiedene Straßenzustände lässt sich der Druckspeicher über einen Hydraulikschlauch von der Hydraulikversorgung der Erntemaschine unter gewünschten Druck setzen. Zur Straßenfahrt wird das System vom Hydrauliksystem der Erntemaschine getrennt.

Der Erfindung liegt die Aufgabe zugrunde, die Nachteile des zitierten Standes der Technik zu vermeiden und eine Erntemaschine der eingangs näher bezeichneten Art so weiterzubilden, dass eine Erntemaschine mit einem während des Straßentransports von einem mit dem Boden in Kontakt stehenden Stützrad abgestützten Erntevorsatzgerätes einen sicheren Bremsvorgang erreicht und Limits in Richtung eines zulässigen maximalen Bremsweges nicht überschreitet.

Diese Aufgabe wird erfindungsgemäß durch Patentanspruch 1 gelöst, wobei in den weiteren Patentansprüchen Merkmale aufgeführt sind, die diese Lösung in vorteilhafter Weise weiterentwickeln.

Indem eine Steuereinrichtung vorhanden ist, die beim Betätigen der Bremseinrichtung der Erntemaschine den Auflagedruck des wenigstens einen Stützrades auf dem Boden regelt, kann Achslastverteilung geregelt und insbesondere Fahrzeuggewicht auf die angetriebene und gebremste Triebachse der Erntmaschine verlagert werden, so dass ein sicherer Bremsvorgang erreichbar ist und Limits in Richtung eines zulässigen maximalen Bremsweges nicht überschritten werden, auch wenn große Vorsatzgeräte während der Transportfahrt von einem mit dem Boden in Kontakt stehenden Stützrad abgestützt werden.

Gemäß der Erfindung steht die Steuereinrichtung mit wenigstens einem an der Aufnahmevorrichtung angeordneten Hubzylinder in Wirkverbindung, wobei der Auflagedruck des wenigstens einen Stützrades durch die Druckbeaufschlagung und die Druckentlastung des wenigstens einen Hubzylinders geregelt wird und erhöht beim Betätigen der Bremseinrichtung den Druckwert in dem wenigstens einen Hubzylinder, so dass dadurch ein Teil des Gewichtes des Vorsatzgerätes, welches vom Stützrad abgestützt wird, auf die gebremste Triebachse verlagert wird, so dass eine verbesserte Bodenhaftung der Räder der vorderen Triebachse vorliegt und die Bremswirkung erhöht wird.

In einer weiteren Ausgestaltung der Erfindung wird von der Steuereinrichtung eine Erhöhung des Druckwertes im wenigstens einen Hubzylinder bewirkt, bevor die durch die betätigte Bremseinrichtung erfolgende Geschwindigkeitsreduzierung der Erntemaschine eingesetzt hat, so dass bereits eine Teillast des montierten Vorsatzgerätes vom Stützrad auf die vordere Triebachse vor der eintretenden Geschwindigkeitsreduzierung der Erntemaschine verlagert wird, um die Bremswirkung der gebremsten Triebachse durch eine verbesserte Bodenhaftung der Räder der Triebachse zu erhöhen, so dass insbesondere auch Limits in Bezug auf einen einzuhaltenden Bremsweges nicht überschritten werden.

Dadurch, dass beim Betätigen der Bremseinrichtung der Druckwert des wenigstens einen Hubzylinders in Abhängigkeit von der Achslast der Triebachse und/oder Lenkachse der Erntemaschine geregelt wird, ist sichergestellt, dass der optimale Druckwert im wenigstens einen Hubzylinder zur Einstellung der Achslasten für einen sicheren Bremsvorgang der Erntemaschine einstellbar ist.

In einer weiteren vorteilhaften Ausgestaltung der Erfindung wird der Druckwert des wenigstens einen an der Aufnahmevorrichtung montierten Hubzylinder in Abhängigkeit von der Art des montierten Vorsatzgerätes geregelt, so dass beim Betätigen der Bremseinrichtung der Erntemaschine die Druckregelung an das jeweils montierte Vorsatzgerät und dessen Gewicht anpassbar und eine verbesserte Bodenhaftung der gebremsten Räder der Triebachse erreichbar ist und somit das Abbremsen der Erntemaschine trotz eines montierten und abgestützten Vorsatzgerätes, insbesondere für den unerfahrenen Bediener, erleichtert wird. Idealerweise wird zudem die Art des montierten Vorsatzgerätes berücksichtigt, so dass beim Betätigen der Bremseinrichtung entsprechende Druckwerte im wenigstens einem Hubzylinder eingestellt werden können, um eine gezielte Be- und Entlastung insbesondere der gebremsten Triebachse zu bewirken.

In einer weiteren Ausgestaltung der Erfindung erfolgt eine Erhöhung des Druckwertes im wenigstens einen Hubzylinder erst, wenn der Druckwert außerhalb eines vorgegebenen Toleranzbereichs liegt.

In bevorzugter Ausgestaltung kann die Triebachse und/oder die Lenkachse der Erntemaschine mit wenigstens einem lastsensierenden Sensor ausgerüstet serin, der lastabhängige Signale an eine Steuereinrichtung überträgt und in Abhängigkeit von den Signalen, die Steuereinrichtung beim Betätigen der Bremseinrichtung den Druckwert im wenigstens einen Hubzylinder regelt, um ein sicheres Abbremsen der Erntemaschine zu ermöglichen. Vorzugsweise erhöht die Steuereinrichtung den Druckwert im wenigstens einen Hubzylinder, wenn beim Betätigen der Bremseinrichtung eine definierbare Achssolllast an der Triebachse und/oder Lenkachse unterschritten wird. Dagegen wird von der Steuereinrichtung der Druckwert im Hydraulikzylinder reduziert, wenn beim Betätigen der Bremseinrichtung eine definierbare Achssolllast an der Triebachse und/oder Lenkachse überschritten wird.

Im Fall, dass das montierte und zu transportierende Vorsatzgerät relativ breit und schwer ist, erweist es sich als vorteilhaft, dass das wenigstens eine Stützrad an einem Wagen montiert ist, der unter das Vorsatzgerät und/oder die Erntemaschine schiebbar und dort verrastbar ist, so dass eine größere Auflagefläche zur Ablage des Vorsatzgerätes vorhanden ist, um insbesondere beim Bremsvorgang der Erntemaschine das Abheben des Fahrzeughecks der Erntemaschine zu verhindern. In einer konkreten Ausführungsform weist der Wagen ein Rahmengestell und mindestens ein sich nach unten erstreckendes Stützrad auf, wobei das Rahmengestell zur Abstützung des Vorsatzgerätes und zur Gewichtsentlastung der Triebachse und/oder Lenkachse der Erntemaschine bei einer Transportfahrt lösbar am an der Erntemaschine angebrachten Vorsatzgeräte befestigt und zum Erntebetrieb vom Vorsatzgerät trennbar ist.

Weitere vorteilhafte Ausgestaltungen sind Gegenstand weiterer Unteransprüche und werden nachfolgend anhand von Zeichnungen näher erläutert.

Es zeigen:
- Figur 1:: eine schematische Darstellung einer landwirtschaftlichen Erntemaschine in Form eines Feldhäckslers mit einem montierten auf einem Wagen ab- gelegten Vorsatzgerät
- Figur 2: eine Prinzipdarstellung eines auf einem Wagen abgelegten Vorsatzgerä- tes mit der erfindungsgemäßen Steuereinrichtung

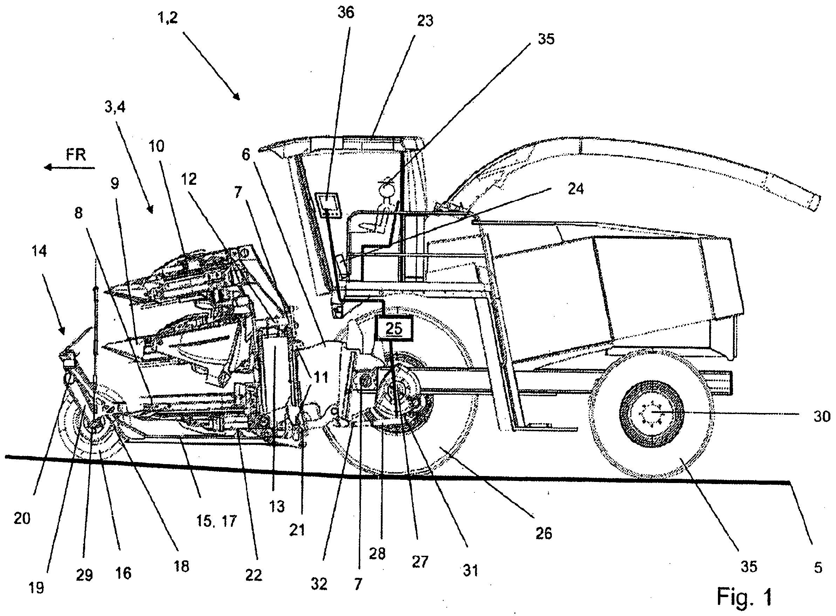

Figur 1 zeigt eine Seitenansicht einer selbstfahrenden Erntemaschine 1, die als Feldhäcksler 2 ausgeführt und der frontseitig in Fahrtrichtung FR ein Vorsatzgerät 3 in Form eines Maisgebisses 4, zugeordnet ist. Das Vorsatzgerät 3 dient dazu, das zu bearbeitende Erntegut vom Feldboden 5 aufzunehmen und zu schneiden, so dass es den nachgeordneten hier nicht näher abgebildeten Arbeitsaggregaten zugeführt werden kann. Dem Vorsatzgerät 3 ist eine Aufnahmevorrichtung bzw. ein Einzugsgehäuse 6 nachgeordnet, wobei das Einzugsgehäuse 6 über eine Schwenkachse 7 vertikal zu der Fahrtrichtung FR und zum Ausgleich der Längsneigung verschwenkbar ist.

Das Vorsatzgerät 3 ist klappbar ausgeführt und besteht aus drei Sektionen 8, 9, 10 wobei die mittlere Sektion 9 über Koppelungspunkte 11 mit dem Einzugsgehäuse 7 des Feldhäckslers 2 verbunden ist. Beidseitig der mittleren Sektion 9 sind die äußeren Sektionen 8, 10 hochgeklappt in Schwenklagern 12, die sich auf der Rückseite des mittleren Maschinengestells 13 auf nicht näher gezeigten Lagerkonsolen abstützen, mit diesem verbunden. Die hochgeklappte Lage ist gleichzeitig die Transportposition des Vorsatzgerätes 3. Mit dieser klappbaren Ausführung können beispielsweise Arbeitsbreiten bis zu etwa 9 Metern realisiert werden. Ein Wagen 14, der ein Rahmengestell 15 und ein vorlaufendes mit dem Boden 5 in Kontakt stehendes Stützrad 16 aufweist, dient zur Abstützung des Vorsatzgerätes 3 während der Transportfahrt. Für den Ernteeinsatz ist der Wagen 14 demontierbar. Das Rahmengestell 15 besteht aus zwei seitlich nebeneinander angeordneten, rückwärtigen Tragelementen 17, die sich unterhalb des Vorsatzgerätes 3 nahezu horizontal erstrecken. An der in Fahrtrichtung FR liegenden vorderen Endseite des jeweiligen Tragelements 17 erstrecken sich schräg nach oben führende Streben 18. An einer an der oberen Strebe 18 angelenkten sich leicht schräg nach unten erstreckenden Schwinge 19 ist das Stützrad 16 angeordnet. Das Stützrad 16 ist um seine Drehachse 20 drehbar an der Schwinge 19 angelenkt. Die Befestigung des Vorsatzgerätes 3 am Wagen 14 erfolgt im endseitigen Bereich des jeweiligen sich nahezu horizontal erstreckenden Trageelementes 17 in einem Koppelungspunkt 21. Während das Vorsatzgerät 3 mit dem Wagen 14 im Koppelungspunkt 21 fixiert ist, ist es um eine horizontale Achse vertikal verschwenkbar und nimmt eine Schwimmstellung ein. Im auf dem Wagen 14 abgelegten Zustand liegt die mittlere Sektion 9 des verklappten Vorsatzgerätes 3 auf dem Auflagepunkt 22 des Wagens 15 auf, so dass ein definierbarer Gewichtsanteil des Vorsatzgerätes 3 vom Wagen 14 abgestützt wird. Aufgrund der Schwimmstellung des Wagens 14 kann das dem Vorsatzgerät 3 vorlaufende Stützrad 16 des Wagens 14 Bodenunebeneinheiten nachvollziehen und verbleibt während der Transportfahrt im ständigen Bodenkontakt. Eine Bremseinrichtung für die Erntemaschine 1, die immer zwingend vorhanden ist, ist in den Figuren aus Gründen der Übersichtlichkeit nicht im Detail dargestellt. Die Einleitung des Bremsvorgangs erfolgt im Ausführungsbeispiel mittels Betätigung des in der Fahrerkabine 23 angeordneten Bremspedals 24. Die Aggregate zum Betreiben der Bremseinrichtung sind ebenfalls nicht näher dargestellt. Deren Ausbildung und Anordnung stellt für den Fachmann kein Problem dar.

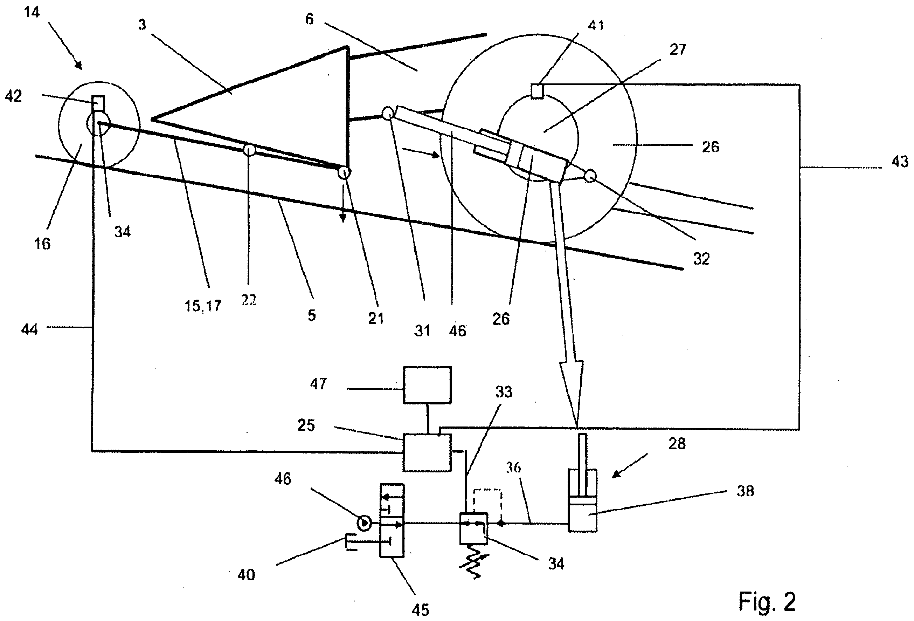

Damit das Abbremsen der Erntemaschine 1 während der Transportfahrt mit montiertem und abgestütztem Vorsatzgerät 3 sicher vollzogen werden kann, ist erfindungsgemäß der Erntemaschine 1 eine Steuereinrichtung 25 zugeordnet, die beim Betätigen der Bremseinrichtung, hier mit dem Betätigen des Bremspedals 24, den durch die Steuereinrichtung 25 gesteuerten Auflagedruck des wenigstens einen Stützrades 16 auf den Boden 5 regelt, so dass eine solche Achslastverteilung erreicht wird, die eine verstärkte Bodenhaftung der gebremsten Räder 26 der Triebachse 27 bewirken, so dass ein sicherer Bremsvorgang erreichbar ist und Limits in Richtung eines zulässigen maximalen Bremsweges nicht überschritten werden. Im Ausführungsbeispiel erfolgt mit dem Betätigen des Bremspedals 24 die Auflagedruckregelung mittels der beidseitig am Einzugsgehäuse 6 der Erntemaschine 1 angeordneten Hubzylinder 28, durch deren Druckbeaufschlagung und Druckentlastung, wodurch eine definierbare Fahrzeuggewichtsverlagerung auf die Stützradachse 29 des Wagens 14 und auf die Triebachse 27 und auf die Lenkachse 30 der Erntemaschine 1 erreichbar ist. Auch wäre es denkbar, dass das Einzugsgehäuse 6 über nur einen Hubzylinder 28 oder eine beliebige Anzahl von Hubzylindern 28 abgestützt wird. Die Hubzylinder 28 sind drehbeweglich im unteren Bereich der vorderen Triebachse 27 in einem Drehpunkt 27 drehbeweglich angeordnet, wobei die jeweilige Kolbenstange der Hubzylinder 28 drehbeweglich seitlich in einem Drehpunkt 31 im unteren Bereich des Einzugsgehäuses 6 angeordnet sind. Die Hubzylinder 28 sind nicht näher dargestellt einfachwirkend ausgeführt und stehen über eine Leitung 33 mit der Steuereinrichtung 25 in Wirkverbindung. Zur Steuerung der Hubzylinder 28 kann im einfachsten Fall dem Drucksystem der Hubzylinder 28 ein in Figur 2 noch näher darzustellendes Druckregelventil 34 zugeordnet sein.

Der Triebachse 27 und/oder Lenkachse 30 der Erntemaschine 1 und der Stützradachse 29 des Wagens 14 können lastsensierende Sensoren die in Figur 2 noch näher darzustellen sind, zugeordnet sein, die beispielsweise als Drucksensor zur Ermittlung des Reifendrucks der Räder der Erntemaschine 1 und des Stützrades 16 ausgeführt sind. Die lastsensierenden Sensoren generieren in Abhängigkeit von der jeweiligen Achslast hier nicht näher dargestellte Eingangssignale. Auf diese Weise wird es möglich, die Achslastverteilung auch in Abhängigkeit von der Abstützung des Vorsatzgerätes durch das Stützrad 16 auf den Feldboden 5 beim Betätigen der Bremseinrichtung zum Abbremsen der Erntemaschine zu ermitteln. Zudem ist denkbar, den Druck im am Einzugsgehäuse 6 angeordneten Hubzylinder 28 als Indikator für die Ermittlung der Achslast der Triebachse 27 und/oder der Lenkachse 30 zu nutzen, um eine Information über die aktuelle Achslasten zu erhalten.

Mit dem Betätigen des Bremspedals 24 empfängt die Steuereinrichtung 25 über eine Verbindungsleitung ein entsprechendes Bremssignal. In Abhängigkeit von der jeweiligen aktuellen Achslastverteilung, welches durch die entsprechenden lastsensierenden Sensoren ermittelt wird, erhöht die Steuereinrichtung 25 im Regelfall den Druckwert im Hubzylinder 28 durch dessen Druckbeaufschlagung, so dass eine Teillast vom montierten Vorsatzgerät 3, welche vom Stützrad 16 aufgenommen wird, um während der Transportfahrt normierte Achslasten einhalten zu können, auf die gebremste Triebachse 27 verlagert wird, so dass die an der Triebachse 27 angeordneten Räder 26 eine verbesserte Bodenhaftung haben und eine erhöhte Bremswirkung beim Abbremsen der Erntemaschine 1 bewirken. Wird während des Bremsvorgangs vom lastsensierenden Sensor an der Lenkachse 30 eine verminderte Achslast sensiert, was auf ein bevorstehendes Abheben der an der Lenkachse 30 angeordneten Räder 35 vom Boden 5 hindeutet, wird von der Steuereinrichtung 25 ein entsprechendes Signal an das Drucksystem des Hubzylinders 28 generiert, dass zu einer Druckwertminderung durch eine Druckentlastung im Hubzylinder 28 führt, so dass wieder eine Gewichtsverlagerung auf das, das montierte Vorsatzgerät 3 abstützende Stützrad 16 erfolgt. Zudem ist denkbar, dass die jeweils aktuelle vor dem Bremsvorgang vorliegende Fahrgeschwindigkeit der Erntemaschine 1 bei der Auflagedruckregelung zur Achslastverteilung während des Bremsvorgangs Berücksichtigung findet.

Vorzugsweise ist zur Anzeige des eingestellten Druckwertes und des tatsächlichen Druckwertes eine Anzeigeneinheit 36 in der Fahrerkabine 23 vorgesehen, so dass der Bediener 37 der Erntemaschine 1 eine permanente Kontrolle über die Druckregelung des wenigstens einen am Einzugsgehäuse 6 angeordneten Hubzylinders 28 hat. Zudem sind die entsprechenden Achslasten am Stützrad 29 und/oder an der Triebachse 27 und/oder an der Lenkachse 30 anzeigbar.

In einer weiteren vorteilhaften Weiterentwicklung der Erfindung wird von der Steuereinrichtung 25 eine Erhöhung des Druckwertes im wenigstens einen Hubzylinder 28 bewirkt, bevor die durch die betätigte Bremseinrichtung erfolgende Geschwindigkeitsreduzierung der Erntemaschine 1 eingesetzt hat, so dass eine Teillast des montierten Vorsatzgerätes 3 vom Stützrad 16 auf die vordere Triebachse 27 verlagert wird, bevor die Bremswirkung der Bremseinrichtung eingesetzt hat, um die Bremswirkung der gebremsten Triebachse 27 durch eine verbesserte Bodenhaftung der Räder 26 der Triebachse 27 zu erhöhen, so dass insbesondere auch Limits in Bezug auf einen einzuhaltenden Bremsweges nicht überschritten werden.

Eine bevorzugte Ausgestaltung zeichnet sich dadurch aus, dass die Steuereinrichtung 25 zu- und abschaltbar ist. So ist sichergestellt, dass der einerseits der erfahrene Bediener 37 den Bremsvorgang durch eine entsprechende Achslastverteilung regeln kann und andererseits der unerfahrene Bediener 37 durch Zuschaltung der Steuereinrichtung 25 die entsprechende Achslastverleitung automatisch steuern lassen kann.

In einer weiteren Ausgestaltung der Erfindung erfolgt mittels der Steuereinrichtung 25 eine Erhöhung des Druckwertes im wenigstens einen Hubzylinder 28 erst, wenn der Druckwert außerhalb eines vorgegebenen Toleranzbereichs liegt, so dass eine permanente Druckbeaufschlagung und Druckentlastung des Hubzylinder 28 und damit ein Springen der Räder 26 vermieden wird. In einer bevorzugten Ausgestaltung wird beim Betätigen der Bremseinrichtung das Über- und/oder Unterschreiten einer definierbaren Achssolllast an der Triebachse 27 und/oder an der Lenkachse 30 durch eine akustische und/oder optische Warnmeldung auf einer in der Fahrerkabine 23 angeordneten Anzeigeneinheit 36 zur Anzeige gebracht wird, so dass der Bediener 37 der Erntemaschine 1 eine Rückmeldung darüber erhält, dass beispielhaft beim Unterschreit einer definierbaren Achssolllast an der Triebachse 27 eine verringerte Bodenhaftung der Räder 26 der Triebachse 27 gegeben ist und/oder beispielhaft ein Unterschreitung einer definierbaren Achssolllast an der Lenkachse 30, welches ein Abheben der der Lenkachse 30 zugeordneten Räder 35 vom Boden signalisiert, so dass vom Bediener 37 die erforderliche Einstellung des Druckwertes im wenigstens einen Hubzylinder 28 manuell vorgenommen werden kann, um einen sicheren Bremsvorgang realisieren zu können. Zur Bedienung der Steuereinrichtung und zur Eingabe von Druckwerten ist eine hier nicht näher dargestellte Eingabevorrichtung in der Fahrerkabine 23 vorgesehen.

Figur 2 zeigt nun eine Prinzipdarstellung eines an einem Einzugsgehäuse 6 einer nicht näher dargestellten Erntemaschine montierten Vorsatzgerätes 3, welches in einem Koppelungspunkt 21 mit einem ein Stützrad 16 aufweisenden Wagen 14 verbunden ist. In der dargestellten Ausführungsvariante befindet sich die Erntemaschine 1 mit dem Wagen 14 auf einer Transportfahrt talaufwärts. Zur Regelung des Auflagedrucks des Stützrades 16 auf dem Boden 5 befindet sich seitlich am Einzugsgehäuse 6 ein Hubzylinder 28 der einenends im Drehpunkt 31 drehbeweglich mit dem Einzugsgehäuse 6 und anderenends hier nicht näher dargestellt drehbeweglich im unteren Bereich der gebremsten Triebachse 27 angeordnet ist. Der Hubzylinder 28 ist einfachwirkend ausgeführt ist, wobei die kolbenflächige Seite 38 des Hubzylinders 28 über eine Leitung 40 mit wenigstens einem elektronischen Druckregelventil 41 verbunden ist. Mittels des Druckregelventils 41 ist der Druck in der Leitung 40 einstellbar, wobei bei Überschreitung des eingestellten Druckschwellwertes das Druckregelventil 34 die Leitung 39 mit dem Tank 40 verbindet, so dass ein Teil des energieübertragenden Mediums in den Tank 40 abfließen kann. So ist die Möglichkeit geschaffen, die von dem oder den Hubzylindern 28 des Einzugsgehäuses 6 auf das Stützrad 16 und die Triebachse 27 und/oder der nicht dargestellten Lenkachse 30 der Erntemaschine übertragene Achslastverteilung zu regeln. Zur Ermittlung der Achslast sind dem Stützrad 16 und der gebremsten Triebachse 27 jeweils ein Lastsensor 41, 42 zugeordnet, die jeweils über eine Leitung 43, 44 mit der Steuereinrichtung 25 in Verbindung stehen. Hier nicht näher dargestellt kann auch der Lenkachse ein lastsensierender Sensor zugeordnet sein. Über ein schaltbares 2/2-Wegeventil 45 ist die Leitung 39 zudem mit der integrierten Pumpe 46 oder dem Tank 40 verbunden. Die Druckbeaufschlagung der Leitung 39 führt dazu, dass die Kolbenstange 48 aus dem Hubzylinder 28 herausgeschoben wird. Dabei führt das Einzugsgehäuse 6 eine Schwenkbewegung um ihre hier nicht näher dargestellte an der Erntemaschine 1 angeordneten Schwenkachse in eine bodenferne Position aus. Gleichzeitig verbleibt das am Wagen 14 angeordnete Stützrad 16 aufgrund der vorhandenen Schwimmstellung am Boden 5. Aufgrund dessen, dass der Hubzylinder 28 einfachwirkend ausgeführt ist, führt das schwerkraftbedingte Absenken des Einzugsgehäuses 6 gleichzeitig zum Einfahren der Kolbenstange 46 des Hubzylinders 28. Wird nun die mit der Steuereinrichtung 25 in Verbindung stehende Bremseinrichtung 47 mittels Betätigung des hier nicht dargestellten Bremspedals aktiviert, um das Abbremsen der Erntemaschine während der Bergfahrt zu bewirken, erfolgt ein Signal von der Steuereinrichtung 25 an das Drucksystem, den Druckwert im Hubzylinder 28 zu erhöhen, so dass eine definierbare Teillast des montierten und vom Wagen 14 abgestützten Vorsatzgerätes 3, insbesondere auf die Triebachse 27 der Erntemaschine verlagert wird, um eine verstärkte Bodenhaftung der Räder 26 der Triebachse 27 zu erreichen und damit eine erhöhte Bremswirkung zu bewirken. Beim Bremsvorgang während einer Transportfahrt talaufwärts ist zu berücksichtigen, dass das Gesamtgewicht der Erntemaschine 1 bedingt dadurch, dass es schwerkraftbedingt als Kraftkomponente den Bremsvorgang unterstützt, die Gewichtsverlagerung zugunsten der gebremsten Triebachse 27 geringer ausfällt, als wenn die Erntemaschine talwärts fahren würden, wobei hier die Druckwerterhöhung im Hubzylinder 28 höher ausfällt als beim einem Bremsvorgang auf einer horizontalen Strecke. Denkbar ist, dass der Erntemaschine 1 ein an sich bekannter und hier nicht näher dargestellter Neigungssensor zugeordnet ist, um während des Bremsvorgangs entsprechend de rsensierten Neigung der Erntemaschine 1 zum Boden, den Auflagedruck zu regeln und damit die Achslastverteilung steuern zu können, um ein sicheres Abbremsen der Erntemaschine 1 zu erreichen.

Dadurch bedingt, dass der Wagen 14 im am Vorsatzgerät 3 montierten Zustand, schwimmend die Bodenunebeneinheiten nachvollzieht und das Stützrad 16 somit permanent mit dem Boden 5 in Kontakt bleibt, kann auch wenn der Bremsvorgang beim Durchfahren von Bodenunebeneinheiten vollzogen wird, die gewünschte Achslastverteilung mittels der Steuereinrichtung 25 durch Druckbeaufschlagung oder Druckentlastung des Hubzylinders 28 geregelt werden, so dass die Räder 26 der gebremsten Triebachse 27 beim Bremsvorgang der Erntemaschine 1 eine verstärkte Bodenhaftung aufweisen, so dass eine erhöhte Bremswirkung erreicht wird.

Es liegt im Rahmen des Könnens eines Fachmanns, das beschriebene Ausführungsbeispiel in nicht dargestellter Weise abzuwandeln, um die beschriebenen Effekte zu erzielen, ohne dabei den Rahmen der Erfindung zu verlassen.

### Bezugszeichenliste:

- 1: Selbstfahrende Erntemaschine
- 2: Feldhäcksler
- 3: Vorsatzgerät
- 4: Maisgebiss
- 5: Feldboden
- 6: Einzugsgehäuse
- 7: Schwenkachse
- 8: Sektion
- 9: Sektion
- 10: Sektion
- 11: Koppelungspunkt
- 12: Schwenklager
- 13: Maschinengestell
- 14: Wagen
- 15: Rahmengestell
- 16: Stützrad
- 17: Tragelement
- 18: Strebe
- 19: Schwinge
- 20: Drehachse
- 21: Koppetungspunkt
- 22: Auflagepunkt
- 23: Fahrerkabine
- 24: Bremspedal
- 25: Steuereinrichtung
- 26: Räder
- 27: Triebachse
- 28: Hubzylinder
- 29: Stützradachse
- 30: Lenkachse
- 31: Drehpunkt
- 32: Drehpunkt
- 33: Leitung
- 34: Druckregelventil
- 35: Räder
- 36: Anzeigeeinheit
- 37: Bediener
- 38: Kolbenflächige Seite
- 39: Leitung
- 40: Taster
- 41: Lastsensor
- 42: Lastsensor
- 43: Leitung
- 44: Leitung
- 45: Wegeventil
- 46: Pumpe
- 47: Bremseinrichtung
- 48: Kolbenstange
- FR: Fahrtrichtung

## Patentansprüche

1. Selbstfahrende landwirtschaftliche Erntemaschine (1) mit wenigstens einer höhenbeweglichen Aufnahmevorrichtung (6) zur Adaption eines landwirtschaftlichen Vorsatzgerätes (3), wobei das Vorsatzgerät (3) in Transportposition durch wenigstens ein mit dem Boden (5) in Kontakt stehendes Stützrad (16) abgestützt wird und mit einer Bremseinrichtung (47) zum Abbremsen der Räder (35) der Erntemaschine (1), wobei eine Steuereinrichtung (25) vorhanden ist, die beim Betätigen der Bremseinrichtung (47), den Auflagedruck des wenigstens einen Stützrades (16) auf dem Boden (5) regelt, wobei
die Steuereinrichtung (25) mit wenigstens einem an der Aufnahmevorrichtung (6) angeordneten Hubzylinder (28) in Wirkverbindung steht und der Auflagedruck des wenigstens einen Stützrades (16) durch die Druckbeaufschlagung und die Druckentlastung des wenigstens einen Hubzylinders (28) geregelt und beim Betätigen der Bremseinrichtung (47) der Druckwert im wenigstens einen Hubzylinder (28) durch die Steuereinrichtung erhöht wird, so dass dadurch ein Teil des Gewichtes des Vorsatzgerätes, welches vom Stützrad abgestützt wird, auf eine gebremste, vordere Triebachse verlagert wird, so dass eine verbesserte Bodenhaftung der Räder der Triebachse vorliegt und die Bremswirkung erhöht wird.

2. Selbstfahrende landwirtschaftliche Erntemaschine nach Anspruch 1, **dadurch gekennzeichnet, dass** die Steuereinrichtung (25) den Druckwert im wenigstens einen Hubzylinder (28) erhöht, bevor die durch die betätigte Bremseinrichtung (47) erfolgende Geschwindigkeitsreduzierung eintritt.

3. Selbstfahrende landwirtschaftliche Erntemaschine nach wenigstens einem der vorhergehenden Ansprüche, **dadurch gekennzeichnet, dass** beim Betätigen der Bremseinrichtung (47) der Druckwert des wenigstens einen Hubzylinders (28) in Abhängigkeit von der Achslast der Triebachse (27) und/oder Lenkachse (30) der Erntemaschine (1) geregelt wird.

4. Selbstfahrende landwirtschaftliche Erntemaschine nach wenigstens einem der vorhergehenden Ansprüche, **dadurch gekennzeichnet, dass** beim Betätigen der Bremseinrichtung (47) der Druckwert des wenigstens einen Hubzylinders (28) in Abhängigkeit von der Art des montierten Vorsatzgerätes (3) geregelt wird.

5. Selbstfahrende landwirtschaftliche Erntemaschine nach wenigstens einem der vorhergehenden Ansprüche, **dadurch gekennzeichnet, dass** beim Betätigen der Bremseinrichtung (47) die Steuereinrichtung (25) den Druckwert erst erhöht, wenn der Druckwert außerhalb eines vorgegebenen Toleranzbereichs liegt.

6. Selbstfahrende Erntemaschine nach wenigstens einem der vorhergehenden Ansprüche, **dadurch gekennzeichnet, dass** die Triebachse (27) und/oder die Lenkachse (30) mit wenigstens einem lastsensierenden Sensor (41, 42) ausgerüstet ist/sind, die lastabhängige Signale an die Steuereinrichtung (25) übertragen und in Abhängigkeit von den Signalen, die Steuereinrichtung (25) beim Betätigen der Bremseinrichtung (47) den Druckwert im wenigstens einen Hubzylinder (28) regelt.

7. Selbstfahrende landwirtschaftliche Erntemaschine nach wenigstens einem der vorhergehenden Ansprüche, **dadurch gekennzeichnet, dass** wenn beim Betätigen der Bremseinrichtung (47) eine definierbare Achssolllast an der Triebachse (27) und/oder Lenkachse (30) unterschritten wird, die Steuereinrichtung (25) den Druckwert im wenigstens einem Hubzylinder erhöht.

8. Selbstfahrende landwirtschaftliche Erntemaschine nach wenigstens einem der vorhergehenden Ansprüche, **dadurch gekennzeichnet, dass** wenn beim Betätigen der Bremseinrichtung (47) eine definierbare Achssolllast an der Triebachse (27) und/oder Lenkachse (30) überschritten wird, die Steuereinrichtung (25) den Druckwert im wenigstens einen Hubzylinder (28) reduziert.

9. Selbstfahrende landwirtschaftliche Erntemaschine nach wenigstens einem der vorhergehenden Ansprüche, **dadurch gekennzeichnet, dass** das wenigstens eine Stützrad (16) an einem Wagen (14) montiert ist, der unter das Vorsatzgerät (3) und/oder unter die Erntemaschine (1) schiebbar und dort verrastbar ist.

10. Selbstfahrende landwirtschaftliche Erntemaschine nach wenigstens einem der vorhergehenden Ansprüche, **dadurch gekennzeichnet, dass** der Wagen (14) ein Rahmengestell (15) und mindestens ein sich nach unten erstreckendes Rad (16) aufweist, das Rahmengestell (15) zur Abstützung des Vorsatzgerätes (3) und zur Gewichtsentlastung der Triebachse (27) und/oder der Lenkachse (30) der Erntemaschine (1) bei einer Transportfahrt lösbar an dem an der Erntemaschine (1) angebrachten Vorsatzgerät (3) befestigbar und zum Erntebetrieb vom Vorsatzgerät (3) trennbar ist, wobei der Wagen (14) im befestigten Zustand eine Schwimmstellung einnimmt.

## Claims

1. A self-propelled agricultural harvesting machine (1) comprising at least one height-movable mounting device (6) for adaptation of an agricultural front-mounted attachment (3), wherein the front-mounted attachment (3) is supported in a transport position by at least one support wheel (16) which is in contact with the ground (5), and a braking device (47) for braking the wheels (35) of the harvesting machine (1), wherein there is a control device (25) which upon actuation of the braking device (47) regulates the contact pressure of the at least one support wheel (16) on the ground (5) wherein
the control device (25) is operatively connected to at least one stroke cylinder (28) arranged on the mounting device (6) and the contact pressure of the at least one support wheel (16) is regulated by pressure application and pressure relief of the at least one stroke cylinder (28) and the pressure value in the at least one stroke cylinder (28) is increased upon actuation of the braking device (47) by the control device so that in that way a part of the weight of the front-mounted attachment which is supported by the support wheel is displaced on to a braked front drive axle so that improved ground adhesion of the wheels of the front axle occurs and the braking effect is increased.

2. A self-propelled agricultural harvesting machine according to claim 1 **characterised in that** the control device (25) increases the pressure value in the at least one stroke cylinder (28) before the reduction in speed effected by the actuated braking device (47) occurs.

3. A self-propelled agricultural harvesting machine according to at least one of the preceding claims **characterised in that** upon actuation of the braking device (47) the pressure value of the at least one stroke cylinder (28) is regulated in dependence on the axle load of the drive axle (27) and/or steering axle (30) of the harvesting machine (1).

4. A self-propelled agricultural harvesting machine according to at least one of the preceding claims **characterised in that** upon actuation of the braking device (47) the pressure value of the at least one stroke cylinder (28) is regulated in dependence on the nature of the mounted front-mounted implement (3).

5. A self-propelled agricultural harvesting machine according to at least one of the preceding claims **characterised in that** upon actuation of the braking device (47) the control device (25) only increases the pressure value when the pressure value lies outside a predetermined tolerance range.

6. A self-propelled agricultural harvesting machine according to at least one of the preceding claims **characterised in that** the drive axle (27) and/or the steering axle (30) is/are equipped with at least one load-sensing sensor (41, 42) which transmits load-dependent signals to the control device (25) and in dependence on the signals the control device (25) regulates the pressure value in the at least one stroke cylinder (28) upon actuation of the braking device (47).

7. A self-propelled agricultural harvesting machine according to at least one of the preceding claims **characterised in that** if upon actuation of the braking device (47) the load at the drive axle (27) and/or the steering axle (30) falls below a definable reference axle load the control device (25) increases the pressure value in the at least one stroke cylinder.

8. A self-propelled agricultural harvesting machine according to at least one of the preceding claims **characterised in that** if upon actuation of the braking device (47) a definable reference axle load is exceeded at the drive axle (27) and/or the steering axle (30) the control device (25) reduces the pressure value in the at least one stroke cylinder (28).

9. A self-propelled agricultural harvesting machine according to at least one of the preceding claims **characterised in that** the at least one support wheel (16) is mounted to a carriage (14) which can be pushed under the front-mounted attachment (3) and/or under the harvesting machine (1) and can be latched there.

10. A self-propelled agricultural harvesting machine according to at least one of the preceding claims **characterised in that** the carriage (14) has a frame structure (15) and at least one downwardly extending wheel (16), the frame structure (15) for supporting the front-mounted attachment (3) and for relieving the weight of the drive axle (27) and/or the steering axle (30) of the harvesting machine (1) in a transport mode can be releasably fixed to the front-mounted attachment (3) mounted to the harvesting machine (1) and can be separated from the front-mounted attachment (3) for the harvesting mode, wherein the carriage (14) assumes a floating position in the fixed condition.

## Revendications

1. Machine de récolte agricole automotrice (1) comprenant au moins un dispositif de réception (6) déplaçable en hauteur pour l'adaptation d'un outil frontal agricole (3), l'outil frontal (3) étant soutenu en position de transport par au moins une roue porteuse (16) en contact avec le sol (5), et comprenant un dispositif de freinage (47) pour freiner les roues (35) de la machine de récolte (1), un dispositif de commande (25) étant prévu, lequel, lorsque le dispositif de freinage (47) est actionné, règle la pression d'appui de ladite au moins une roue porteuse (16) sur le sol (5), le dispositif de commande (25) coopérant avec au moins un cylindre de levage (28) disposé sur le dispositif de réception (6), et la pression d'appui de ladite au moins une roue porteuse (16) étant réglée par la mise sous pression et la détente dudit au moins un cylindre de levage (28) et, lorsque le dispositif de freinage (47) est actionné, la valeur de pression étant augmentée dans ledit au moins un cylindre de levage (28) par le dispositif de commande, de façon qu'une partie du poids de l'outil frontal soutenue par la roue porteuse soit transférée à un essieu moteur avant freiné, de manière à améliorer l'adhérence des roues de l'essieu moteur et à augmenter l'effet de freinage.

2. Machine de récolte agricole automotrice selon la revendication 1, **caractérisée en ce que** le dispositif de commande (25) augmente la valeur de pression dans ledit au moins un cylindre de levage (28) avant que n'intervienne la réduction de vitesse produite par l'actionnement du dispositif de freinage (47).

3. Machine de récolte agricole automotrice selon au moins l'une des revendications précédentes, **caractérisée en ce que**, lorsque le dispositif de freinage (47) est actionné, la valeur de pression dudit au moins un cylindre de levage (28) est réglée en fonction de la charge de l'essieu moteur (27) et/ou de l'essieu directeur (30) de la machine de récolte (1).

4. Machine de récolte agricole automotrice selon au moins l'une des revendications précédentes, **caractérisée en ce que**, lorsque le dispositif de freinage (47) est actionné, la valeur de pression dudit au moins un cylindre de levage (28) est réglée en fonction du type de l'outil frontal (3) monté.

5. Machine de récolte agricole automotrice selon au moins l'une des revendications précédentes, **caractérisée en ce que**, lorsque le dispositif de freinage (47) est actionné, le dispositif de commande (25) n'augmente la valeur de pression que lorsque celle-ci se trouve en dehors d'une plage de tolérance prédéfinie.

6. Machine de récolte agricole automotrice selon au moins l'une des revendications précédentes, **caractérisée en ce que** l'essieu moteur (27) et/ou l'essieu directeur (30) est/sont équipé(s) d'au moins un capteur sensible à la charge (41, 42) qui transmet des signaux dépendant de la charge au dispositif de commande (25) et, en fonction des signaux, le dispositif de commande (25) règle la valeur de pression dans ledit au moins un cylindre de levage (28) lorsque le dispositif de freinage (47) est actionné.

7. Machine de récolte agricole automotrice selon au moins l'une des revendications précédentes, **caractérisée en ce que** si une charge d'essieu de consigne définissable n'est pas atteinte sur l'essieu moteur (27) et/ou l'essieu directeur (30) lorsque le dispositif de freinage (47) est actionné, le dispositif de commande (25) augmente la valeur de pression dans ledit au moins un cylindre de levage.

8. Machine de récolte agricole automotrice selon au moins l'une des revendications précédentes, **caractérisée en ce que** si une charge d'essieu de consigne définissable est dépassée sur l'essieu moteur (27) et/ou l'essieu directeur (30) lorsque le dispositif de freinage (47) est actionné, le dispositif de commande (25) réduit la valeur de pression dans ledit au moins un cylindre de levage (28) .

9. Machine de récolte agricole automotrice selon au moins l'une des revendications précédentes, **caractérisée en ce que** ladite au moins une roue porteuse (16) est montée sur un chariot (14) qui peut être glissé sous l'outil frontal (3) et/ou sous la machine de récolte (1) et y être encliqueté.

10. Machine de récolte agricole automotrice selon au moins l'une des revendications précédentes, **caractérisée en ce que** le chariot (14) présente un châssis (15) et au moins une roue (16) s'étendant vers le bas, le châssis (15) pouvant être fixé de manière amovible sur l'outil frontal (3) monté sur la machine de récolte (1) pour soutenir l'outil frontal (3) et soulager l'essieu moteur (27) et/ou l'essieu directeur (30) de la machine de récolte (1) pendant un trajet de transport et être séparé de l'outil frontal (3) pour la récolte, le chariot (14) adoptant une position flottante à l'état fixé.
